(19)

Europäisches
Patentamt
European
Patent Office
Office européen
des brevets

(11)  **EP 4 585 407 A1**

(12)  **EUROPEAN PATENT APPLICATION**

(43) Date of publication:
  **16.07.2025  Bulletin 2025/29**

(21) Application number: **24223250.2**

(22) Date of filing: **24.12.2024**

(51) International Patent Classification (IPC):
  **B30B 3/04** $^{(2006.01)}$     **B21B 37/16** $^{(2006.01)}$
  **B30B 15/26** $^{(2006.01)}$

(52) Cooperative Patent Classification (CPC):
  **B30B 3/04; B30B 15/26; H01M 4/0435**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority:  **09.01.2024  CN 202410028995**

(71) Applicant: **Hithium Tech HK Limited
  Hong Kong (HK)**

(72) Inventor: **WANG, Zikai
  Shenzhen, 518110 (CN)**

(74) Representative: **Mewburn Ellis LLP
  Aurora Building
  Counterslip
  Bristol BS1 6BX (GB)**

(54)  **CONTROL METHOD FOR ROLL PRESS DEVICE, CONTROLLER, ELECTRONIC DEVICE, AND
  STORAGE MEDIUM**

(57)    A control method for a roll press device, a controller, an electronic device, and a storage medium are disclosed in the present disclosure. The method is applied to the controller. The controller is connected to a roll press device. The roll press device includes least one master cylinder, at least one bending cylinder, and a roller. The at least one master cylinder and the at least one bending cylinder are configured to adjust the roller to roll a target product. The method includes the following. A first average thickness of the target product is obtained. A first deviation value between the first average thickness and a preset target thickness is determined. A master-cylinder adjustment value of the at least one master cylinder is determined according to the first deviation value, in response to the first deviation value being greater than a first preset deviation-value. The at least one master cylinder is adjusted according to the master-cylinder adjustment value, in response to the master-cylinder adjustment value being greater than a first threshold. A second average thickness is obtained in response to the master-cylinder adjustment value being less than or equal to the first threshold. A bending-cylinder adjustment value is determined according to the second average thickness. The at least one bending cylinder is adjusted according to the bending-cylinder adjustment value. By implementing the method in the present disclosure, it is beneficial to improve the quality of products produced by the roll press device.

A FIRST AVERAGE THICKNESS OF A TARGET PRODUCT IS OBTAINED, AND A FIRST DEVIATION VALUE BETWEEN THE FIRST AVERAGE THICKNESS AND A PRESET TARGET THICKNESS IS DETERMINED — S201

A MASTER-CYLINDER ADJUSTMENT VALUE OF THE AT LEAST ONE MASTER CYLINDER IS DETERMINED ACCORDING TO THE FIRST DEVIATION VALUE, IN RESPONSE TO THE FIRST DEVIATION VALUE BEING GREATER THAN A FIRST PRESET DEVIATION-VALUE — S202

THE AT LEAST ONE MASTER CYLINDER IS ADJUSTED ACCORDING TO THE MASTER-CYLINDER ADJUSTMENT VALUE, IN RESPONSE TO THE MASTER-CYLINDER ADJUSTMENT VALUE BEING GREATER THAN A FIRST THRESHOLD — S203

A SECOND AVERAGE THICKNESS OF THE TARGET PRODUCT IS OBTAINED IN RESPONSE TO THE MASTER-CYLINDER ADJUSTMENT VALUE BEING LESS THAN OR EQUAL TO THE FIRST THRESHOLD, A BENDING-CYLINDER ADJUSTMENT VALUE IS DETERMINED ACCORDING TO THE SECOND AVERAGE THICKNESS, AND THE AT LEAST ONE BENDING CYLINDER IS ADJUSTED ACCORDING TO THE BENDING-CYLINDER ADJUSTMENT VALUE — S204

**FIG. 2**

EP 4 585 407 A1

## Description

TECHNICAL FIELD

This disclosure relates to the technical field of general adjustment system for new energy, and in particular to a control method for a roll press device, a controller, an electronic device, and a storage medium.

BACKGROUND

In existing control methods for roll press devices, rollers are adjusted mainly by master hydraulic cylinders, to ensure the quality of products produced by the roll press device. However, when the master hydraulic cylinder is unable to continue to play an adjustment role under the control of a control system, users need to manually adjust the roll press device. Since a thickness tolerance band required for a produced product is relatively wide, after the device is normally started, it is difficult for personnel to 100% identify subtle changes in thickness and other data during production to adjust, thereby affecting the quality of products produced by the roll press device.

SUMMARY

With regard to the above problems, embodiments of the present disclosure provide a control method for a roll press device and a related device. The solution of the present disclosure is beneficial to improving the quality of products produced by the roll press device.

To achieve the above objectives, in a first aspect, a control method for a roll press device is provided in embodiments of the present disclosure, and is applied to a controller. The roll press device includes at least one master cylinder, at least one bending cylinder, and a roller. The at least one master cylinder and the at least one bending cylinder are configured to adjust the roller to roll a target product. The method includes the following. A first average thickness of the target product is obtained. A first deviation value between the first average thickness and a preset target thickness is determined. A master-cylinder adjustment value of the at least one master cylinder is determined according to the first deviation value, in response to the first deviation value being greater than a first preset deviation-value. The at least one master cylinder is adjusted according to the master-cylinder adjustment value, in response to the master-cylinder adjustment value being greater than a first threshold. A second average thickness of the target product is obtained, in response to the master-cylinder adjustment value being less than or equal to the first threshold. A bending-cylinder adjustment value is determined according to the second average thickness. The at least one bending cylinder is adjusted according to the bending-cylinder adjustment value.

With reference to the first aspect, in a possible embodiment, adjusting the at least one master cylinder according to the master-cylinder adjustment value includes the following. The at least one master cylinder is adjusted according to the master-cylinder adjustment value, until the master-cylinder adjustment value is less than or equal to the first threshold.

With reference to the first aspect, in a possible embodiment, before obtaining the first average thickness of the target product, the method further includes the following. An operating speed of the roll press device is obtained. A first pressure of the at least one master cylinder and a second pressure of the at least one bending cylinder are obtained, in response to the operating speed being greater than a preset speed. Alarm information is generated in response to each of the first pressure and the second pressure not satisfying a preset pressure-limit.

With reference to the first aspect, in a possible embodiment, after adjusting the at least one bending cylinder according to the bending-cylinder adjustment value, the method further includes the following. An operating speed of the roll press device and a measurement distance between the target product and a thickness gauge are obtained. A delay duration of the roll press device is calculated out according to the operating speed and the measurement distance. The thickness gauge is configured to measure a thickness of the target product. An actual adjustment value of the at least one master cylinder or the at least one bending cylinder is obtained. In response to an absolute value of a difference between the actual adjustment value and the bending-cylinder adjustment value being less than a preset difference, a first average thickness of the target product at a corresponding side of the at least one master cylinder is obtained after the delay duration. An operation of determining the first deviation value between the first average thickness and the preset target thickness is repeated, until the actual adjustment value is equal to 0.

With reference to the first aspect, in a possible embodiment, the at least one bending cylinder includes multiple bending cylinders. Determining the bending-cylinder adjustment value according to the second average thickness includes the following. A second average thickness of the target product at a corresponding side of each of the multiple bending cylinders is obtained. A second deviation value corresponding to each of the multiple bending cylinders is determined, according to the second average thickness of the target product at the corresponding side of each of the multiple bending cylinders. Multiple bending-cylinder adjustment values are determined according to a third open coefficient and a maximum second deviation value among multiple second deviation values, in response to the maximum second deviation value being greater than a second preset deviation-value. The third open coefficient is a conversion coefficient between a thickness and a pressure.

With reference to the first aspect, in a possible embodiment, the second average thickness includes a middle average thickness and an edge average thickness. Obtaining the second average thickness of the target product at the corresponding side of each of the multiple bending cylinders, and determining the second deviation value corresponding to each of the multiple bending cylinders according to the second average thickness of the target product at the corresponding side of each of the multiple bending cylinders, includes the following. Multiple thicknesses are obtained by a thickness gauge, by measuring a thickness of the target product at the corresponding side of each of the multiple bending cylinders in a preset measurement direction. Multiple target thicknesses are obtained by excluding thicknesses of the target product in a thinned region from the multiple thicknesses. The middle average thickness is calculated out, according to thicknesses of the target product in a middle film region among the multiple target thicknesses. The edge average thickness is calculated out, according to thicknesses of the target product in an edge film region among the multiple target thicknesses. A difference between the middle average thickness and the edge average thickness is determined as the second deviation value corresponding to each of the multiple bending cylinders corresponding to the target product.

With reference to the first aspect, in a possible embodiment, the at least one master cylinder includes two master cylinders. The multiple bending cylinders include a first bending cylinder and a second bending cylinder. The first bending cylinder and the two master cylinders are mounted at the same side of the roll press device. The second bending cylinder and the two master cylinders are mounted at different sides of the roll press device. Adjusting the multiple bending cylinders according to the bending-cylinder adjustment value includes the following. A third pressure adjustment-value is determined according to a first pressure adjustment-value. The third pressure adjustment-value is used for adjusting the multiple bending cylinders and adjusting the two master cylinders. A first quantity of accumulated adjustment times of the first bending cylinder is obtained. In response to the first quantity of accumulated adjustment times being less than a preset quantity of limit times, the first bending cylinder is adjusted according to the first pressure adjustment-value and the two master cylinders are adjusted according to the third pressure adjustment-value. A second quantity of accumulated adjustment times of the second bending cylinder is obtained, in response to the first quantity of accumulated adjustment times being not less than the preset quantity of limit times. In response to the second quantity of accumulated adjustment times being less than the preset quantity of limit times, the second bending cylinder is adjusted according to the first pressure adjustment-value, and the two master cylinders are adjusted according to the third pressure adjustment-value. In response to the second quantity of accumulated adjustment times being not less than the preset quantity of limit times, the first quantity of accumulated adjustment times and the second quantity of accumulated adjustment times are set to be zero, the first bending cylinder is adjusted according to the first pressure adjustment-value, and the two master cylinders are adjusted according to the third pressure adjustment-value.

With reference to the first aspect, in a possible embodiment, determining the master-cylinder adjustment value of the at least one master cylinder according to the first deviation value includes the following. The first deviation value of the target product is determined according to the first average thickness. An adjustment manner for adjusting the at least one master cylinder is obtained. The adjustment manner for adjusting the at least one master cylinder is one of pressure adjustment or roll gap adjustment. A second pressure adjustment-value of the at least one master cylinder is determined according to the first deviation value and a first open coefficient, in response to the adjustment manner for adjusting the at least one master cylinder being the pressure adjustment. The first open coefficient is a conversion coefficient between a thickness and a pressure. A roll gap adjustment-value of the at least one master cylinder is determined according to the first deviation value and a second open coefficient, in response to the adjustment manner for adjusting the at least one master cylinder being the roll gap adjustment. The second open coefficient is a conversion coefficient between a thickness and a roll gap value.

In a second aspect, a controller is provided in embodiments of the present disclosure. The controller is configured to execute a control method for a roll press device. The controller is configured to be connected to the roll press device. The roll press device includes at least one master cylinder, at least one bending cylinder, and a roll. The at least one master cylinder and the at least one bending cylinder are configured to adjust the roller to roll a target product. The controller includes an obtaining unit, a determining unit, and an adjusting unit. The obtaining unit is configured to obtain a first average thickness of the target product, and determine a first deviation value between the first average thickness and a preset target thickness. The determining unit is configured to determine a master-cylinder adjustment value of the at least one master cylinder according to the first deviation value in response to the first deviation value being greater than a first preset deviation-value. The adjusting unit is configured to adjust the at least one master cylinder according to the master-cylinder adjustment value in response to the master-cylinder adjustment value being greater than a first threshold. The adjusting unit is further configured to obtain a second average thickness in response to the master-cylinder adjustment value being less than or equal to the first threshold, determine a bending-cylinder adjustment value according to the second average thickness, and adjust the at least one bending cylinder according to the bending-cylinder adjustment value.

In a third aspect, an electronic device is provided in embodiments of the present disclosure. The electronic device includes a processor, a memory, a communication interface, and one or more programs. The one or more programs are stored in the memory and configured to be executed by the processor. One or more instructions are configured to be loaded by the processor and execute part or all of the method in the first aspect.

In a fourth aspect, a computer-readable storage medium is provided in embodiments of the present disclosure. The computer-readable storage medium stores a computer program for electronic data interchange which, when executed, is operable with a computer to execute part or all of the method in the first aspect.

BRIEF DESCRIPTION OF THE DRAWINGS

To describe technical solutions in embodiments of the present disclosure or in the related art more clearly, the following briefly introduces the accompanying drawings required for describing the embodiments or the related art. Apparently, the accompanying drawings in the following description show merely some embodiments of the present disclosure. For those of ordinary skill in the art, other accompanying drawings may also be obtained according to these accompanying drawings without creative efforts.

FIG. 1 is a schematic diagram of an application scenario of a control method for a roll press device provided in an embodiment of the present disclosure.
FIG. 2 is a schematic flowchart of a control method for a roll press device provided in an embodiment of the present disclosure.
FIG. 3 is a schematic diagram of measuring a first average thickness by a thickness gauge provided in an embodiment of the present disclosure.
FIG. 4 is a schematic flowchart of a control method for a roll press device provided in another embodiment of the present disclosure.
FIG. 5 is a schematic diagram of master-cylinder cycle control provided in an embodiment of the present disclosure.
FIG. 6 is a schematic flowchart of a control method of a roll press device provided in yet another embodiment of the present disclosure.
FIG. 7 is a schematic diagram of bending-cylinder cycle control provided in an embodiment of the present disclosure.
FIG. 8 is a schematic diagram of region partition of a target product provided in an embodiment of the present disclosure.
FIG. 9 is a schematic structural diagram of a controller provided in an embodiment of the present disclosure.
FIG. 10 is a schematic structural diagram of an electronic device provided in an embodiment of the present disclosure.

DETAILED DESCRIPTION

In order to enable those skilled in the art to better understand solutions of the present disclosure, the following will clearly and completely describe technical solutions of embodiments of the present disclosure with reference to the accompanying drawings. Apparently, embodiments described herein are merely some embodiments, rather than all embodiments. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "embodiment" referred to herein means that particular features, structures, or properties described in conjunction with embodiments may be defined in at least one embodiment of the present disclosure. The phrase "embodiment" appearing in various places in the specification does not necessarily refer to the same embodiment or an independent/alternative embodiment that is mutually exclusive with other embodiments. Those skilled in the art will understand explicitly and implicitly that an embodiment described in the present disclosure may be combined with other embodiments.

Embodiments of the present disclosure will be described below with reference to the accompanying drawings.

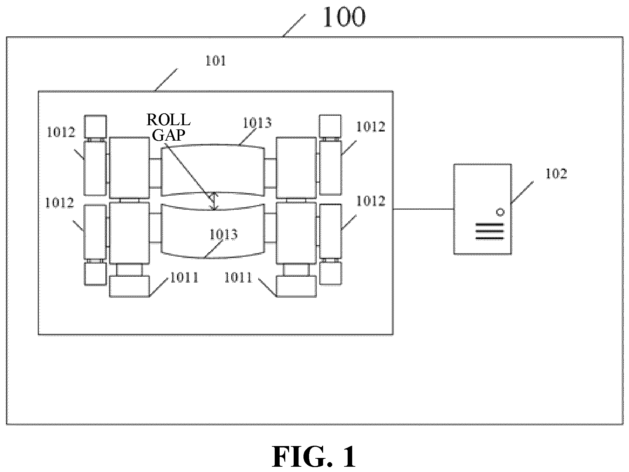

Reference can be made to FIG. 1, which is a schematic diagram of an application scenario of a control method for a roll press device provided in an embodiment of the present disclosure. The application scenario 100 includes a roll press device 101 and a controller 102. The roll press device 101 includes a master cylinder 1011, a bending cylinder 1012, and a roller 1013. Here, different numbers of master cylinders 1011 and bending cylinders 1012 can be deployed in the roll press device 101 according to different actual requirements. Here, for example, there are only two master cylinders 1011 and four bending cylinders 1012, which shall not be construed as a limitation to embodiments of the present disclosure. The controller 102 is configured to obtain information such as operating data of the master cylinder 1011, the bending cylinder 1012, and the roller 1013, the size of the roll gap, and the like, and control the roll press device, so as to ensure the product quality of the target product produced from the roll gap. The target product herein may specifically be a battery electrode sheet, etc. The master cylinder 1011 and the bending cylinder 1012 are configured to apply pressure to the roller 1013 to change the roll gap, and specifically, they may be servo hydraulic cylinders.

The controller 102 obtains a first average thickness of a target product, and determine a first deviation value between the first average thickness and a preset target thickness. The first average thickness herein is obtained by measuring the target product by a measuring device such as a thickness gauge in the roll press device 101 under the control of the controller 102. If the first deviation value is greater than the first preset deviation-value, a master-cylinder adjustment value of the master cylinder 1011 is determined according to the first deviation value. If the master-cylinder adjustment value is greater than the first threshold, the master cylinder 1011 is adjusted according to the master-cylinder adjustment value. If the master-cylinder adjustment value is less than or equal to the first threshold, adjustment of the master cylinder is completed. The controller 102 obtains a bending-cylinder adjustment value. The bending-cylinder adjustment value herein is determined according to a second average thickness, where the second average thickness is also obtained by measuring the target product by the measuring device such as the thickness gauge in the roll press device 101 under the control of the controller 102. After the bending-cylinder adjustment value is obtained, the controller 102 adjusts the bending cylinder 1012 according to the bending-cylinder adjustment value.

The above method may be performed when debugging is performed before the roll press device 101 performs the formal production operation, and after the first deviation value is less than or equal to the first preset deviation-value, the above method may end and the roll press device 101 is controlled to start the formal production. The above method may also be performed during the formal production of the roll press device 101, to adjust the average thickness of the target product.

It can be seen that, whether the master cylinder needs to be adjusted is determined by means of the first average thickness of the target product. When the master cylinder needs to be adjusted, the master cylinder is adjusted according to the master-cylinder adjustment value generated based on the first average thickness. When the master-cylinder adjustment value is less than or equal to the first threshold, the adjustment of the master cylinder ends. A new average thickness of the target product is obtained, so as to obtain the bending-cylinder adjustment value. The bending cylinder is adjusted according to the bending-cylinder adjustment value. When the master cylinder adjustment is unable to play a further adjustment role, the roll press device is adjusted by means of the bending cylinder adjustment, thereby improving the product quality of the target product, reducing human involvement, and improving the production efficiency.

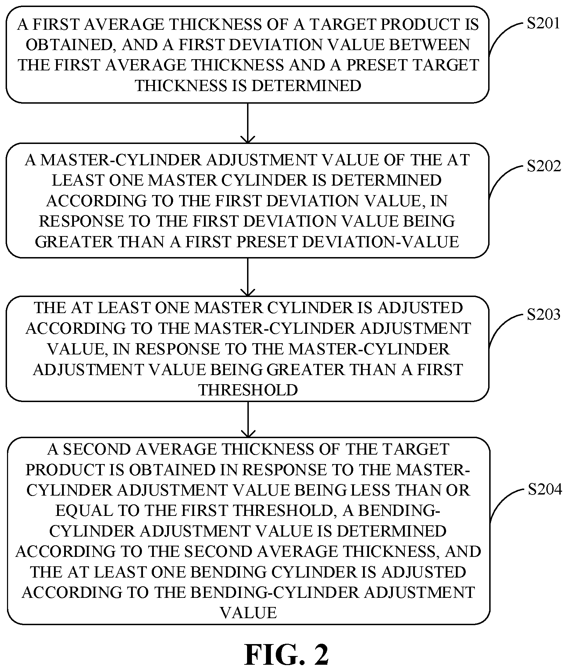

Reference can be made to FIG. 2, which is a schematic flowchart of a control method for a roll press device provided in an embodiment of the present disclosure, which may be implemented based on the application scenario illustrated in FIG. 1. As illustrated in FIG. 2, the method includes S201 - S204.

S201, a first average thickness of a target product is obtained. A first deviation value between the first average thickness and a preset target thickness is determined.

Specifically, after the target product is produced, multiple thicknesses of the target product at multiple measurement points are measured by a thickness gauge. The first average thickness of the target product is obtained according to the multiple thicknesses. The first deviation value is obtained by calculating a difference between the first average thickness and the preset target thickness. The preset target thickness herein may be a specific numerical value or a numerical range.

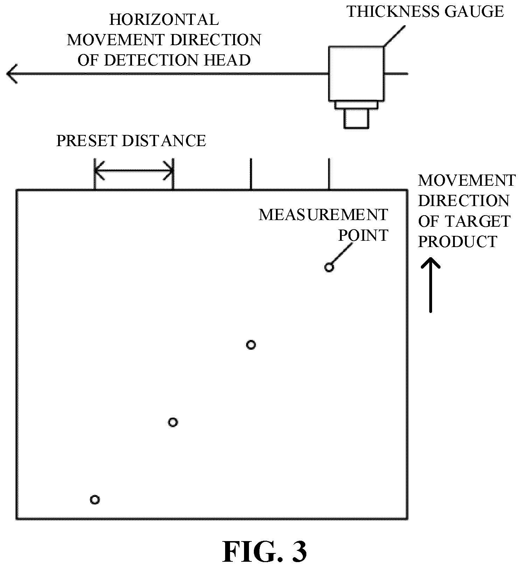

Reference can be made to FIG. 3, which is a schematic diagram of measuring a first average thickness by a thickness gauge provided in an embodiment of the present disclosure. A detection head of the thickness gauge moves in a horizontal direction. After the detection head of the thickness gauge moves a preset distance, a detection measurement is performed to obtain a thickness of the target product at a measurement point. In terms of measuring the thickness of the target product corresponding to the measurement point, since the target product moves along a conveyor belt, actual measurement points are not multiple points on the same horizontal line, but are multiple points distributed in a non-horizontal direction as illustrated in FIG. 3.

Further, when there are multiple master cylinders, the first average thickness of the target product corresponding to each of the multiple master cylinders needs to be calculated. Exemplarily, if there are two master cylinders distributed left and right sides of the target product, an average thickness of the left half of the target product and an average thickness of the right half of the target product are calculated respectively. A deviation value between a first average thickness of the target product corresponding to the left-side master cylinder and the preset target thickness is calculated according to the first average thickness of the target product corresponding to the left-side master cylinder, a deviation value between a first average thickness of the target product corresponding to the right-side master cylinder and the preset target thickness is calculated according to the first average thickness of the target product corresponding to the right-side master cylinder, so that the deviation value with a larger value is recorded as the first deviation value.

In a possible embodiment, before obtaining the first average thickness of the target product, the method further includes the following. An operating speed of the roll press device. In response to the operating speed being greater than a preset speed, a first pressure of the master cylinder and a second pressure of the bending cylinder are obtained. In response to each of the first pressure and the second pressure not satisfying the preset pressure-limit, alarm information is generated.

Specifically, before obtaining the first average thickness of the target product and adjusting the master cylinder and the master cylinder, it is also necessary to determine whether the roll press device operates normally according to the operating speed of the roll press device. When the operating speed of the roll press device is greater than the preset speed, the roll press device can operate normally. The operating speed herein can be determined according to the rotational linear speed of the roller. The first pressure of the master cylinder is a pressure applied by the master cylinder to the roller, and may be determined according to a sensor on the master cylinder or a sensor on the roller. The second pressure of the bending cylinder is a pressure applied by the bending cylinder to the roller, and may be determined according to a sensor on the bending cylinder or a sensor on the roller. The preset pressure-limit herein may specifically include whether the first pressure exceeds an upper pressure-limit thereof and whether the second pressure exceeds an upper pressure-limit thereof. When there are multiple master cylinders and multiple bending cylinders, the preset pressure-limit may further include whether multiple first pressure differences each exceed a pressure difference limit, and whether multiple second pressure differences each exceed the pressure difference limit. If any one of the first pressure and the second pressure exceeds the upper pressure limit, or any one of the pressure differences exceeds the pressure difference limit, the alarm information is generated, to warn a relevant operator that the pressure is abnormal.

It can be seen that, before obtaining the first average thickness of the target product, it is determined whether the roll press device operates normally according to the operating speed of the roll press device, and it is determined whether to generate the alarm information according to the preset pressure-limit, so that the problems, such as damage to the device and the target product caused by the abnormal operating speed and the abnormal pressure of the roll press device, can be avoided.

S202, a master-cylinder adjustment value of the at least one master cylinder is determined according to the first deviation value, in response to the first deviation value being greater than a first preset deviation-value.

Specifically, when the first deviation value is greater than the first preset deviation-value, it can be seen that the thickness of the target product exceeds a preset thickness range, and the adjustment needs to be performed by adjusting the pressure of the master cylinder. An adjustment value to-be-adjusted of the master cylinder is obtained according to the first deviation value. The adjustment value herein may be a pressure, a roller gap value, etc. A pressure adjustment value is obtained according to a conversion coefficient between the first deviation value and the pressure, and then the master-cylinder adjustment value is obtained according to the pressure adjustment value, a pressure of the master cylinder at this time, and a pressure limit of the master cylinder, where the sum of the master-cylinder adjustment value and the pressure of the master cylinder at this time cannot exceed the pressure limit. A roll-gap adjustment value is obtained according to a conversion coefficient between the first deviation value and the roll gap value, and then the master-cylinder adjustment value is obtained according to the roll-gap adjustment value, a roll gap of the master cylinder at this time, and a roll gap limit of the master cylinder, where the sum of the master-cylinder adjustment value and the roll gap value of the master cylinder at this time cannot exceed the roll gap limit.

In addition, when the first deviation value is less than or equal to the first preset deviation-value, it can be seen that the thickness of the target product does not exceed the preset thickness range, so that the target product obtained meets the quality requirement and therefore does not need to be adjusted, the average thickness can be obtained directly, and the bending-cylinder adjustment value is obtained and a bending-cylinder adjustment stage begins.

In a possible embodiment, determining the master-cylinder adjustment value of the at least one master cylinder according to a first deviation value includes the following. The first deviation value of the target product is determined according to the first average thickness. An adjustment manner for adjusting the at least one master cylinder is obtained. The adjustment manner for adjusting the at least one master cylinder is one of pressure adjustment or roll gap adjustment. A second pressure adjustment-value of the at least one master cylinder is determined according to the first deviation value and a first open coefficient, in response to the adjustment manner for adjusting the at least one master cylinder being the pressure adjustment. The first open coefficient is a conversion coefficient between a thickness and a pressure. A roll gap adjustment-value of the at least one master cylinder is determined according to the first deviation value and a second open coefficient, in response to the adjustment manner for adjusting the at least one master cylinder being the roll gap adjustment. The second open coefficient is a conversion coefficient between a thickness and a roll gap value.

Specifically, the adjustment manner herein mainly includes the pressure adjustment and the roll gap adjustment. The pressure adjustment refers to directly adjusting the pressure of the master cylinder to affect the roll gap. The roll gap adjustment refers to adjusting the pressure of the master cylinder by setting the specific value of the roll gap, and the pressure of the master cylinder will change until the roll gap reaches the set roll gap value.

If the adjustment manner of the master cylinder adjustment is the pressure adjustment, the second pressure adjustment-value of the master cylinder is determined according to the first deviation value and the first open coefficient. The first open coefficient is the conversion coefficient between the thickness and the pressure. A product is obtained by multiplying the first deviation value and the first open coefficient, and the product is determined as the master-cylinder adjustment value of the master cylinder. If the adjustment manner for adjusting the master cylinder is the roll gap adjustment, the roll gap adjustment-value of the master cylinder is determined according to the first deviation value and the second open coefficient. The second open coefficient is the conversion coefficient between the thickness and the roller gap value. A product is obtained by multiplying the first deviation value and the second open coefficient, and the product is determined as the master-cylinder adjustment value of the master cylinder.

It can be seen that, in embodiments of the present disclosure, the adjustment manner of the master cylinder adjustment is obtained, and the master-cylinder adjustment value is calculated by using different methods in different adjustment manners, so that the influence of the adjustment manner of the master cylinder on the master-cylinder adjustment value is considered, thereby improving the calculation accuracy of the master cylinder adjustment.

S203, the at least one master cylinder is adjusted according to the master-cylinder adjustment value, in response to the master-cylinder adjustment value being greater than a first threshold.

Specifically, the first threshold herein may be 0, or an adjustment value which may cause an actual effect on the roll gap of the roller. When the master-cylinder adjustment value is greater than the first threshold, the roller can be adjusted by adjusting the master cylinder, and the master cylinder is adjusted according to the master-cylinder adjustment value.

In a possible embodiment, adjusting the at least one master cylinder according to the master-cylinder adjustment value includes the following. The at least one master cylinder is adjusted according to the master-cylinder adjustment value, until the master-cylinder adjustment value is less than or equal to the first threshold.

Specifically, when the master-cylinder adjustment value is greater than the first threshold, the system will adjust and calibrate the roll gap of the roller by adjusting the master cylinder until the master-cylinder adjustment value is less than or equal to the first threshold. When the master-cylinder adjustment value is less than or equal to the first threshold, it is indicated that the quality of the subsequent target product cannot be improved by adjusting the master cylinder, or the master cylinder has reached the adjustment limit, and at this time, the roll gap of the roller will be further adjusted and calibrated by adjusting the bending cylinder.

S204, a second average thickness is obtained in response to the master-cylinder adjustment value being less than or equal to the first threshold. A bending-cylinder adjustment value is determined according to the second average thickness. The at least one bending cylinder is adjusted according to the bending-cylinder adjustment value.

Specifically, when the master-cylinder adjustment value is less than or equal to the first threshold, it can be seen that the quality of the subsequent target product cannot be improved by adjusting the master cylinder at this time, or the master cylinder has reached the adjustment limit. Therefore, the bending-cylinder adjustment value is obtained. The bending-cylinder adjustment value herein can be calculated out according to the second average thickness of the target product. The bending cylinder is adjusted according to the bending-cylinder adjustment value. In a subsequent adjustment process, since the quality of the subsequent target product cannot be improved by adjusting the master cylinder, or the master cylinder has reached the adjustment limit, only the bending-cylinder adjustment value is obtained in the subsequent adjustment process, and the bending cylinder is adjusted according to the bending-cylinder adjustment value.

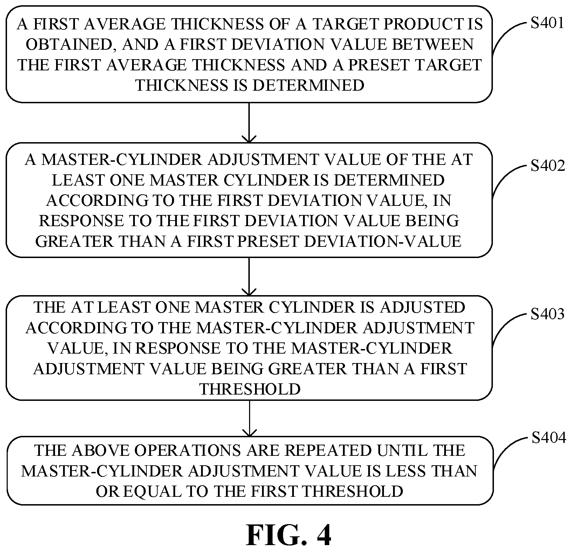

The above embodiments describe that the controller adjusts the master cylinder according to the master-cylinder adjustment value and adjusts the bending cylinder according to the bending-cylinder adjustment value. On this basis, when the master-cylinder adjustment value is greater than the first threshold, embodiments of the present disclosure further provide a control method for a roll press device in more detail. Reference can be made to FIG. 4, which is a schematic flowchart of a control method for a roll press device provided in another embodiment of the present disclosure.

S401, a first average thickness of a target product is obtained. A first deviation value between the first average thickness and a preset target thickness is determined.

S402, a master-cylinder adjustment value of a master cylinder is determined according to the first deviation value, in response to the first deviation value being greater than a first preset deviation-value.

S403, the master cylinder is adjusted according to the master-cylinder adjustment value, in response to the master-cylinder adjustment value being greater than a first threshold.

Specifically, for details about S401 - S403 in the embodiment of the present disclosure, reference may be made to related descriptions of S201 - S203, which are not repeated herein.

S404, the above operations are repeated until the master-cylinder adjustment value is less than or equal to the first threshold.

Specifically, after the master cylinder is adjusted according to the master-cylinder adjustment value, the controller re-obtains a first average thickness of the target product, and re-determines a new first deviation value according to the first average thickness. Then, the controller determines a new master-cylinder adjustment value according to the new first deviation value, adjusts the master cylinder according to the new master-cylinder adjustment value, and then repeats the above operations unit the master-cylinder adjustment value is less than or equal to the first threshold.

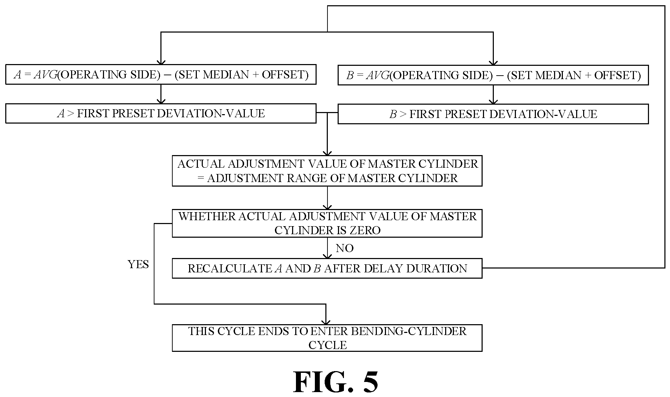

Exemplarily, reference can be made to FIG. 5, which is a schematic diagram of master-cylinder cycle control provided in an embodiment of the present disclosure. *A* represents a deviation value between a target thickness and an actual thickness of the target product corresponding to an operating-side master cylinder. *B* represents a deviation value between a target thickness and an actual thickness of the target product corresponding to a transmission-side master cylinder. *Avg* (operating side) represents a weighted average thickness of an operating-side electrode sheet. Specifically, the final weighted average thickness can be obtained by adding up average values of the three most recent sets of thickness data in the order of 20%, 30%, and 50% (the most recently measured set of data accounts for 50%) according to the order of measuring from early to late. If each of deviation value *A* and deviation value *B* is less than or equal to the first preset deviation-value, deviation value *A* and deviation value *B* can be obtained again after a preset duration. If any one of deviation value *A* and deviation value *B* is greater than the first preset deviation-value, the master-cylinder adjustment value is determined according to a deviation value with a larger numerical value. When the master-cylinder adjustment value is within a preset adjustment range, deviation value *A* and deviation value *B* are obtained again after the delay duration. If the master-cylinder adjustment value is zero, the master-cylinder control cycle ends, and the roll press device is further adjusted by adjusting the bending cylinder.

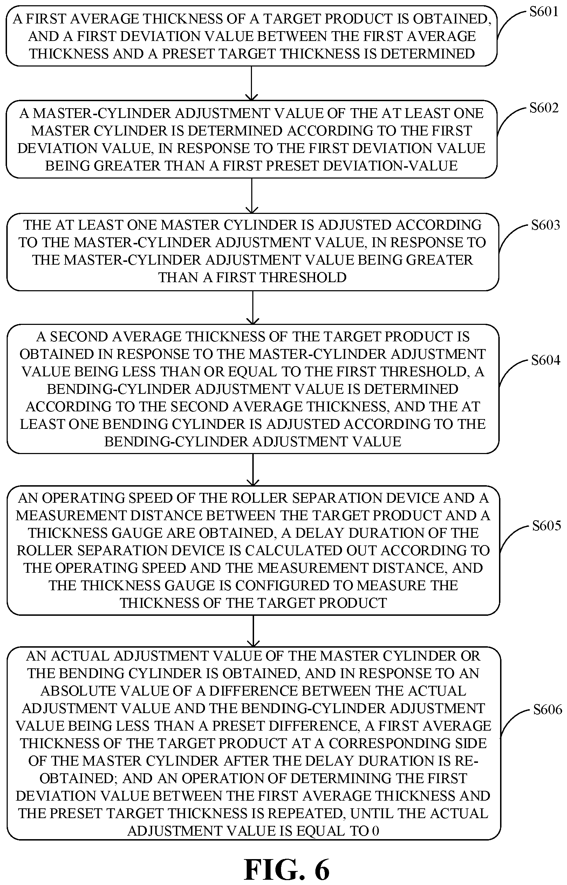

The above embodiments describe that the controller adjusts the master cylinder according to the master-cylinder adjustment value and adjusts the bending cylinder according to the bending-cylinder adjustment value. On this basis, if the master-cylinder adjustment value is greater than the first threshold, embodiments of the present disclosure further provide a control method for a roll press device in more detail. Reference can be made to FIG. 6, which is a schematic flowchart of a control method of a roll press device provided in yet another embodiment of the present disclosure.

S601, a first average thickness of a target product is obtained. A first deviation value between the first average thickness and a preset target thickness is determined.

S602, a master-cylinder adjustment value of a master cylinder is determined according to the first deviation value, in response to the first deviation value being greater than a first preset deviation-value.

S603, the master cylinder is adjusted according to the master-cylinder adjustment value, in response to the master-cylinder adjustment value being greater than a first threshold.

Specifically, for details about S601 - S603 in the embodiment of the present disclosure, reference may be made to related descriptions of S201 - S203, which are not repeated herein.

S604, a second average thickness is obtained in response to the master-cylinder adjustment value being less than or equal to the first threshold. A bending-cylinder adjustment value is determined according to the second average thickness. The bending cylinder is adjusted according to the bending-cylinder adjustment value.

Specifically, since the quality of the subsequent target product cannot be improved by adjusting the master cylinder, or the master cylinder has reached the adjustment limit, the bending-cylinder adjustment value needs to be obtained at this time, and the quality of the target product is improved by adjusting the bending cylinder.

S605, an operating speed of the roll press device and a measurement distance between the target product and a thickness gauge are obtained. A delay duration of the roll press device is calculated out according to the operating speed and the measurement distance. The thickness gauge is configured to measure the thickness of the target product.

Specifically, the operating speed of the roll press device herein may specifically be a linear speed of roller rolling. The thickness gauge is an instrument for measuring the thickness of the target product. A time difference between a moment at which target product data is obtained by the thickness gauge and a moment at which a target product is produced in real time can be calculated, according to the operating speed and the measurement distance. In other words, after the production of the target product is completed, the thickness gauge can measure and obtain the thickness of the target product at a first measurement point only after a delay duration.

S606, an actual adjustment value of the master cylinder or the bending cylinder is obtained. A first average thickness of the target product at a corresponding side of the master cylinder after the delay duration is re-obtained, in response to an absolute value of a difference between the actual adjustment value and the bending-cylinder adjustment value being less than a preset difference. An operation of determining the first deviation value between the first average thickness and the preset target thickness is repeated.

Specifically, when the absolute value of the difference between the actual adjustment value and the bending-cylinder adjustment value is less than the preset difference, it can be seen that the actual adjustment value of the bending cylinder or the master cylinder has reached the requirement of the master-cylinder adjustment value and the bending-cylinder adjustment value. At this time, it is necessary to wait for the delay duration, so that the thickness gauge starts measuring the target product that is produced by the adjusted roll press device.

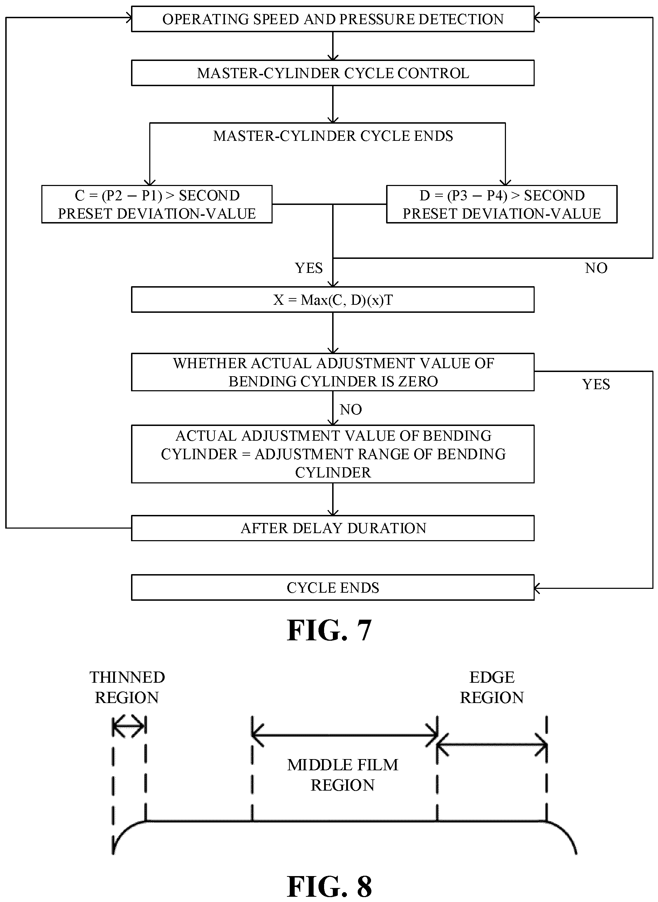

Exemplarily, reference can be made to FIG. 7, which is a schematic diagram of bending-cylinder cycle control provided in an embodiment of the present disclosure. The bending-cylinder control is performed after the master-cylinder adjustment value is less than or equal to the first preset threshold in the master-cylinder cycle control. For the relevant description of the master-cylinder cycle control, reference can be made to FIG. 4. Firstly, the deviation value is obtained, where $C$ is a second deviation value of the bending cylinder at the transmission side, and $D$ is a second deviation value of the bending cylinder at the operating side. The deviation value is calculated out according to an absolute value of a thickness range (that is, a difference between the largest and smallest values) at the corresponding side. When each of $C$ and $D$ is less than or equal to a second preset deviation-value, the operating speed and pressure detection is re-performed and master-cylinder cycle control is re-performed. For details of the operating speed and pressure detection, reference can be made to the described relevant contents before obtaining the first average thickness of the target product. When any one of second deviation value $C$ and second deviation value $D$ is greater than the second preset deviation-value, a bending-cylinder adjustment value $X$ is calculated out according to a greater one of C and D, which can be calculated out by the following formula:

$$X = Max(C, D) \times (x)T \qquad (1)$$

where $Max(C, D)$ is a greater value in second deviation value $C$ and second deviation value $D$, and $(x)T$ is a conversion coefficient. Here, $x$ represents different adjustment manners, such as setting the roll gap adjustment or setting pressure adjustment, and conversion coefficients $(x)T$ corresponding to different adjustment manners are also different. If the actual adjustment value of the bending cylinder is not zero, the bending cylinder is adjusted according to the actual adjustment value of the bending cylinder. When the actual adjustment value of the bending cylinder is within the adjustment range of the bending cylinder, the operating speed and pressure detection is re-performed and master-cylinder cycle control is re-performed after the delay duration.

If the actual adjustment value of the bending cylinder is zero, it indicates that the bending cylinder does not need to be actually adjusted, the adjustment of the device is finished, and the cycle ends. Further, after the cycle ends for a period of time, the operating speed and pressure detection shown in FIG. 7 can be started again, so that the detection is restarted, thereby ensuring the product quality of the target product.

It can be seen that when the master-cylinder adjustment value is less than or equal to the first threshold, the master-cylinder adjustment value is obtained, and the master cylinder is adjusted according to the master-cylinder adjustment value. In addition, the operation of determining the first deviation value between the first average thickness and the preset target thickness is repeated after the adjustment of the bending cylinder ends, so that a complete master-cylinder and bending-cylinder adjustment process is realized. Therefore, the product quality of the target product is improved, human involvement is reduced, and the production efficiency is improved.

In a possible embodiment, at least one bending cylinder includes multiple bending cylinders. Determining the bending-cylinder adjustment value according to the second average thickness includes the following. A second average thickness of the target product at a corresponding side of each of the multiple bending cylinders is obtained. A second deviation value corresponding to each of the multiple bending cylinders is determined, according to the second average thickness at the corresponding side of each of the multiple bending cylinders. Multiple bending-cylinder adjustment values are determined according to a third open coefficient and a maximum second deviation value among multiple second deviation values, in response to the maximum second deviation value being greater than a second preset deviation-value. The third open coefficient is a conversion coefficient between a thickness and a pressure.

Specifically, the corresponding side herein mainly includes an operating side and a transmission side. Taking the roll press device 101 in FIG. 1 as an example, the left side of the roll press device 101 is the transmission side. The target product is divided into a left part and a right part. The second average thickness of the target product at the corresponding side of the bending cylinder at the transmission side is an average thickness of the target product at the left side. The second deviation value corresponding to each bending cylinder is determined, according to the difference between the second average thickness of each bending cylinder measured by the thickness gauge and the target average thickness. Since the deviation value of the target product at the operating side of the roll press device and the deviation value of the target product at the transmission side of the roll press device are not greatly different in actual scenarios, the multiple bending-cylinder adjustment values are determined according to the third open coefficient and the maximum second deviation value.

It can be seen that a common bending-cylinder adjustment value of the multiple bending cylinders, according to the third open coefficient and the maximum second deviation value among the multiple second deviation values corresponding to the multiple bending cylinders, so that the roll press device is adjusted. Therefore, it is not necessary to calculate the bending-cylinder adjustment values according to the second deviation values of the multiple bending cylinders respectively, so that the adjustment efficiency of the roll press device is improved, and the production efficiency is improved.

In a possible embodiment, the second average thickness includes a middle average thickness and an edge average thickness. Obtaining the second average thickness of the target product at the corresponding side of each of the multiple bending cylinders and determining the second deviation value corresponding to each of the multiple bending cylinders according to the second average thickness at the corresponding side of each of the multiple bending cylinders, includes the following. Multiple thicknesses are obtained by measuring a thickness of the target product at the corresponding side of each of the multiple bending cylinders in a preset measurement direction by a thickness gauge. Multiple target thicknesses are obtained by excluding thicknesses of the target product in a thinned region from the multiple thicknesses. The middle average thickness is calculated out, according to thicknesses of the target product in a middle film region among the multiple target thicknesses. The edge average thickness is calculated out, according to the thicknesses of the target product in an edge film region among the multiple target thicknesses. A difference between the middle average thickness and the edge average thickness is determined as the second deviation value corresponding to each of the multiple bending cylinders corresponding to the target product.

Specifically, reference can be made to FIG. 8, which is a schematic diagram of region partition of a target product provided in an embodiment of the present disclosure. When the roll press device produces the target product, an edge region of the target product is referred to as a thinned region. The thickness of the target product in the thinned region is inconsistent with the required thickness of the target product in other regions. As illustrated in FIG. 8, the shape of the target product in the thinned region is also inconsistent with the shape of the target product in other regions. The final desired target product is a target product including the middle film region and the edge film region. Therefore, when the second average thickness is calculated, it is necessary to exclude the thicknesses of the target product in the thinned region from the multiple thicknesses.

The middle average thickness is calculated out according to thicknesses of the target product in the middle film region. The edge average thickness is calculated out according to thicknesses of the target product in the edge film region. Here, the average thickness can be calculated out by means of a weighting method. Specifically, the average thickness can be calculated by assigning certain proportions to the three most recent sets of thickness data according to the order of measuring from early to late (for example, 20%, 30%, and 50%, where 50% is corresponding to thickness data most recently measured). The difference between the middle average thickness and the edge average thickness is the second deviation value.

It can be seen that the multiple thicknesses are obtained by measuring the thickness of the target product at the corresponding side of each bending cylinder in the preset measurement direction by the thickness gauge, so that the influence of the thicknesses of the target product in the thinned region on the second average thickness is excluded, and the accuracy of the second average thickness is improved.

In a possible embodiment, the at least one master cylinder includes two master cylinders. The multiple bending cylinders include a first bending cylinder and a second bending cylinder. The first bending cylinder and the two master cylinders are mounted at the same side of the roll press device. The second bending cylinder and the two master cylinders are mounted at different sides of the roll press device. Adjusting the multiple bending cylinders according to the bending-cylinder adjustment value includes the following. A third pressure adjustment-value is determined according to the first pressure adjustment-value. The third pressure adjustment-value is used for adjusting the multiple bending cylinders and adjusting the two master cylinders. A first quantity of accumulated adjustment times of the first bending cylinder is obtained. In response to the first quantity of accumulated adjustment times being less than a preset quantity of limit times, the first bending cylinder is adjusted according to the first pressure adjustment-value and the two master cylinders are adjusted according to the third pressure adjustment-value. A second quantity of accumulated adjustment times of the second bending cylinder is obtained, in response to the first quantity of accumulated adjustment times being not less than the preset quantity of limit times. In response to the second quantity of accumulated adjustment times being less than the preset quantity of limit times, the second bending cylinder is adjusted according to the first pressure adjustment-value, and the two master cylinders are adjusted according to the third pressure adjustment-value. In response to the second quantity of accumulated adjustment times being not less than the preset quantity of limit times, the first quantity of accumulated adjustment times and the second quantity of accumulated adjustment times are set to be zero, the first bending cylinder is adjusted according to the first pressure adjustment-value, and the two master cylinders are adjusted according to the third pressure adjustment-value.

In particular, the multiple bending cylinders can be divided into the first bending cylinder and the second bending cylinder according to different mounting positions. The first bending cylinder and the two master cylinders are mounted at the same side of the roll press device, that is, two bending cylinders at the lower side illustrated in FIG. 1. The second bending cylinder and the two master cylinders are mounted at different sides of the roll press device, that is, two bending cylinders at the upper side illustrated in FIG. 1.

When the multiple bending cylinders are adjusted according to the first pressure adjustment-value, it is necessary to obtain the corresponding third pressure adjustment-value according to the first pressure adjustment-value at the same time. The third pressure adjustment-value is used for adjusting the multiple bending cylinders and adjusting the two master cylinders at the same time. Therefore, the adjustment effect of the bending cylinder is optimized.

When adjusting the bending cylinder, it is necessary to obtain a first quantity of accumulated adjustment times of the first bending cylinder. If the first quantity of accumulated adjustment times is less than the preset quantity of limit times, the first bending cylinder is adjusted according to the first pressure adjustment-value. Firstly, the second bending cylinder mounted at the different sides of the roll press device from the master cylinder is adjusted, so as to achieve a better adjustment effect under the same pressure adjustment value, and record the second quantity of accumulated adjustment times of the second bending cylinder after the adjustment is completed. When the second quantity of accumulated adjustment times is not less than the preset quantity of limit times, the first bending cylinder is adjusted according to the first pressure adjustment-value, and the first accumulated number of adjustments of the first bending cylinder is recorded. When the first quantity of accumulated adjustment times is not less than the preset quantity of limit times, the first quantity of accumulated adjustment times and the second quantity of accumulated adjustment times are reset to zero. Therefore, the next adjustment is resumed from the second bending cylinder.

It can be seen that the corresponding third pressure adjustment-value is obtained according to the first pressure adjustment-value. When the cylinder is adjusted according to the first pressure adjustment-value, the master cylinder is adjusted at the same time. In addition, the first bending cylinder and the second bending cylinder are cyclically adjusted. Therefore, the adjustment efficiency of the roll press device is improved, and thus the production efficiency is improved.

By implementing the method in the embodiments of the present disclosure, when the master-cylinder adjustment value is less than or equal to the first threshold, the bending-cylinder adjustment value is obtained, and the bending cylinder is adjusted according to the bending-cylinder adjustment value, so that the product quality of the target product is improved, the human involvement is reduced, and the production efficiency is improved. The alarm information is generated when the preset pressure-limit is not satisfied, so that the problems, such as damage to the device and the target product caused by the abnormal operating speed and the abnormal pressure of the roll press device, can be avoided. The influence of the master-cylinder adjustment manner on the master-cylinder adjustment value is considered, so that the calculation accuracy of the master cylinder adjustment is improved. The master-cylinder adjustment value and the bending-cylinder adjustment value are generated according to the maximum deviation value, so that the adjustment efficiency of the roll press device is improved. When the bending cylinder is adjusted, the master cylinder is adjusted at the same time, and the first bending cylinder and the second bending cylinder are cyclically adjusted, so that the adjustment efficiency of the roll press device is improved, and thus the production efficiency is improved.

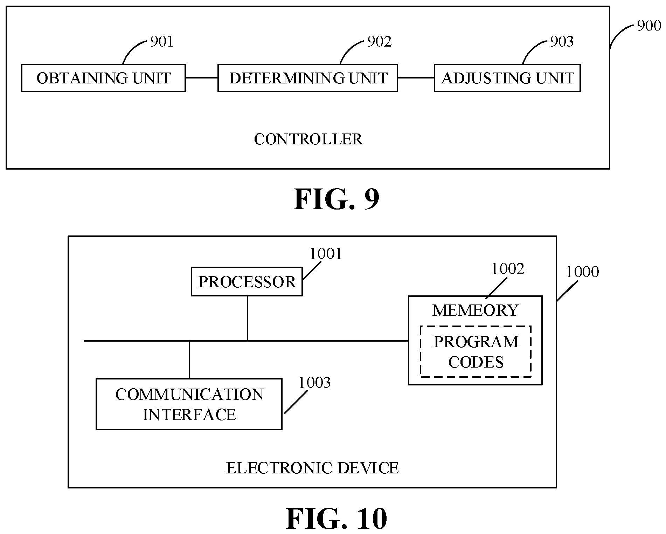

Based on the description of the above configuration method embodiments, the present disclosure also provides a controller 900. The controller 900 may be a computer program (including a program code) running in a processor illustrated in FIG. 1. The controller 900 may be applied to the application scenario illustrated in FIG. 1 and execute the method illustrated in FIG. 2. Reference can be made to FIG. 9, which is a schematic structural diagram of a controller provided in an embodiment of the present disclosure. The controller includes an obtaining unit 901, a determining unit 902, and an adjusting unit 903.

The obtaining unit 901 is configured to obtain a first average thickness of the target product, and determine a first deviation value between the first average thickness and a preset target thickness.

The determining unit 902 is configured to determine a master-cylinder adjustment value of the at least one master cylinder according to the first deviation value in response to the first deviation value being greater than the first preset deviation-value.

The adjusting unit 903 is configured to adjust the at least one master cylinder according to the master-cylinder adjustment value in response to the master-cylinder adjustment value being greater than the first threshold.

The adjusting unit 903 is further configure for obtaining a second average thickness in response to the master-cylinder adjustment value being less than or equal to the first threshold, determine a bending-cylinder adjustment value according to the second average thickness, and adjust the at least one bending cylinder according to the bending-cylinder adjustment value.

In a possible embodiment, the adjusting unit 903 configured to adjust the at least one master cylinder according to the master-cylinder adjustment value is further configured to adjust the at least one master cylinder according to the master-cylinder adjustment value, until the master-cylinder adjustment value is less than or equal to the first threshold.

In a possible embodiment, before obtaining the first average thickness of the target product, the obtaining unit 901 is further configured to obtain an operating speed of the roll press device. The obtaining unit 901 is further configured to obtain first pressure of the at least one master cylinder and a second pressure of the at least one bending cylinder, in response to the operating speed being greater than a preset speed. The obtaining unit 901 is further configured to generate alarm information in response to each of the first pressure and the second pressure not satisfying a preset pressure-limit.

In a possible embodiment, after adjusting the at least one bending cylinder according to the bending-cylinder adjustment value, the obtaining unit 901 is further configured to obtain an operating speed of the roll press device and a measurement distance between the target product and a thickness gauge. The determining unit 902 is further configured to calculate out a delay duration of the roll press device according to the operating speed and the measurement distance. The thickness gauge is configured to measure a thickness of the target product. The obtaining unit 901 is further configured to obtain an actual adjustment value of the at least one master cylinder or the at least one bending cylinder. The obtaining unit 901 is further configured to re-obtain a first average thickness of the target product at a corresponding side of the at least one master cylinder after the delay duration, in response to an absolute value of a difference between the actual adjustment value and the bending-cylinder adjustment value being less than a preset difference. The determining unit 902 is further configured to repeat an operation of determining the first deviation value between the first average thickness and the preset target thickness.

In a possible embodiment, the at least one bending cylinder includes multiple bending cylinders. In terms of determining the bending-cylinder adjustment value according to the second average thickness, the obtaining unit 901 is further configured to obtain a second average thickness of the target product at a corresponding side of each of the multiple bending cylinders, and determine a second deviation value corresponding to each of the multiple bending cylinders according to the second average thickness of the target product at the corresponding side of each of the multiple bending cylinders. The determining unit 902 is further configured to determine multiple bending-cylinder adjustment values according to a third open coefficient and a maximum second deviation value among multiple second deviation values, in response to the maximum second deviation value being greater than a second preset deviation-value. The third open coefficient is a conversion coefficient between a thickness and a pressure.

In a possible embodiment, the second average thickness includes a middle average thickness and an edge average thickness. In terms of obtaining the second average thickness of the target product at the corresponding side of each of the multiple bending cylinders, and determining the second deviation value corresponding to each of the multiple bending cylinders according to the second average thickness of the target product at the corresponding side of each of the multiple bending cylinders, the obtaining unit 901 is further configured to obtain, by a thickness gauge, multiple thicknesses by measuring a thickness of the target product at a corresponding side of each of the multiple bending cylinders in a preset measurement direction, and obtain multiple target thicknesses by excluding thicknesses of the target product in a thinned region from the multiple thicknesses. The determining unit 902 is further configured to calculate out the middle average thickness according to thicknesses of the target product in a middle film region among the multiple target thicknesses, calculate out the edge average thickness according to thicknesses of the target product in an edge film region among the multiple target thicknesses, and determine a difference between the middle average thickness and the edge average thickness as the second deviation value corresponding to each of the multiple bending cylinders corresponding to the target product.

In a possible embodiment, the at least one master cylinder includes two master cylinders. The multiple bending cylinders include a first bending cylinder and a second bending cylinder. The first bending cylinder and the two master cylinders are mounted at the same side of the roll press device. The second bending cylinder and the two master cylinders are mounted at different sides of the roll press device. In terms of adjusting the multiple bending cylinders according to the bending-cylinder adjustment value, the determining unit 902 is further configured to a third pressure adjustment-value according to the first pressure adjustment-value. The third pressure adjustment-value is used for adjusting the multiple bending cylinders and adjusting the two master cylinders. The obtaining unit 902 is further configured to obtain a first quantity of accumulated adjustment times of the first bending cylinder. The adjusting unit 903 is further configured to adjust the first bending cylinder according to the first pressure adjustment-value and the two master cylinders according to the third pressure adjustment-value, in response to the first quantity of accumulated adjustment times being less than a preset quantity of limit times. The obtaining unit 901 is further configured to obtain a second quantity of accumulated adjustment times of the second bending cylinder, in response to the first quantity of accumulated adjustment times being not less than the preset quantity of limit times. The adjusting unit 903 is further configured to adjust the second bending cylinder according to the first pressure adjustment-value and adjust the two master cylinders according to the third pressure adjustment-value, in response to the second quantity of accumulated adjustment times being less than the preset quantity of limit times. The adjusting unit 903 is further configured to set the first quantity of accumulated adjustment times and the second quantity of accumulated adjustment times to be zero, adjust the first bending cylinder according to the first pressure adjustment-value, and adjust the two master cylinders according to the third pressure adjustment-value, in response to the second quantity of accumulated adjustment times being not less than the preset quantity of limit times.

In a possible embodiment, in terms of determining the master-cylinder adjustment value of the at least one master cylinder according to the first deviation value, the determining unit 902 is further configured to determine the first deviation value of the target product according to the first average thickness. The obtaining unit 901 is further obtain an adjustment manner for adjusting the at least one master cylinder. The adjustment manner for adjusting the at least one master cylinder is one of pressure adjustment or roll gap adjustment. The determining unit 902 is further configured to determine a second pressure adjustment-value of the at least one master cylinder according to the first deviation value and a first open coefficient, in response to the adjustment manner for adjusting the at least one master cylinder being the pressure adjustment. The first open coefficient is a conversion coefficient between a thickness and a pressure. The determining unit 902 is further configured to a roll gap adjustment-value of the at least one master cylinder according to the first deviation value and a second open coefficient, in response to the adjustment manner for adjusting the at least one master cylinder being the roll gap adjustment. The second open coefficient is a conversion coefficient between a thickness and a roll gap value.

Based on the description of the foregoing method embodiments and device embodiments, reference can be made to FIG. 10, which is a schematic structural diagram of an electronic device provided in an embodiment of the present disclosure. As illustrated in FIG. 10, an electronic device 1000 described in the embodiment includes a processor 1001, a memory 1002, a communication interface 1003, and one or more programs. The one or more programs are stored in the memory in the form of a program code and are configured to be executed by the processor. In the embodiment of the present disclosure, the above one or more programs include instructions for executing the following.

A first average thickness of the target product is obtained. A first deviation value between the first average thickness and a preset target thickness is determined. A master-cylinder adjustment value of the at least one master cylinder is determined according to the first deviation value, in response to the first deviation value being greater than a first preset deviation-value. The at least one master cylinder is adjusted according to the master-cylinder adjustment value, in response to the master-cylinder adjustment value being greater than a first threshold. A second average thickness is obtained, in response to the master-cylinder adjustment value being less than or equal to the first threshold. A bending-cylinder adjustment value is determined according to the second average thickness. The at least one bending cylinder is adjusted according to the bending-cylinder adjustment value.

In a possible embodiment, adjusting the at least one master cylinder according to the master-cylinder adjustment value includes the following. The at least one master cylinder is adjusted according to the master-cylinder adjustment value, until the master-cylinder adjustment value is less than or equal to the first threshold.

In a possible embodiment, before obtaining the first average thickness of the target product, the method further includes the following. An operating speed of the roll press device is obtained. A first pressure of the at least one master cylinder and a second pressure of the at least one bending cylinder are obtained, in response to the operating speed being greater than a preset speed. Alarm information is generated in response to each of the first pressure and the second pressure not satisfying a preset pressure-limit.

In a possible embodiment, after adjusting the at least one bending cylinder according to the bending-cylinder adjustment value, the method further includes the following. An operating speed of the roll press device and a measurement distance between the target product and a thickness gauge are obtained. A delay duration of the roll press device is calculated out according to the operating speed and the measurement distance. The thickness gauge is configured to measure a thickness of the target product. An actual adjustment value of the at least one master cylinder or the at least one bending cylinder is obtained. In response to an absolute value of a difference between the actual adjustment value and the bending-cylinder adjustment value being less than a preset difference, a first average thickness of the target product at a corresponding side of the at least one master cylinder is re-obtained after the delay duration. An operation of determining the first deviation value between the first average thickness and the preset target thickness is repeated.

In a possible embodiment, the at least one bending cylinder includes multiple bending cylinders. Determining the bending-cylinder adjustment value according to the second average thickness include the following. A second average thickness of the target product at a corresponding side of each of the multiple bending cylinders is obtained. A second deviation value corresponding to each of the multiple bending cylinders is determined, according to the second average thickness of the target product at the corresponding side of each of the multiple bending cylinders. Multiple bending-cylinder adjustment values are determined according to a third open coefficient and a maximum second deviation value among multiple second deviation values, in response to the maximum second deviation value being greater than a second preset deviation-value. The third open coefficient is a conversion coefficient between a thickness and a pressure.

In a possible embodiment, the second average thickness includes a middle average thickness and an edge average thickness. Obtaining the second average thickness of the target product at the corresponding side of each of the multiple bending cylinders, and determining the second deviation value corresponding to each of the multiple bending cylinders according to the second average thickness of the target product at the corresponding side of each of the multiple bending cylinders, includes the following. Multiple thicknesses are obtained by a thickness gauge, by measuring a thickness of the target product at a corresponding side of each of the multiple bending cylinders in a preset measurement direction. Multiple target thicknesses are obtained by excluding thicknesses of the target product in a thinned region from the multiple thicknesses. The middle average thickness is calculated out, according to thicknesses of the target product in a middle film region among the multiple target thicknesses. The edge average thickness is calculated out, according to thicknesses of the target product in an edge film region among the multiple target thicknesses. A difference between the middle average thickness and the edge average thickness is determined as the second deviation value corresponding to each of the multiple bending cylinders corresponding to the target product.

In a possible embodiment, the at least one master cylinder includes two master cylinders. The multiple bending cylinders include a first bending cylinder and a second bending cylinder. The first bending cylinder and the two master cylinders are mounted at the same side of the roll press device. The second bending cylinder and the two master cylinders are mounted at different sides of the roll press device. Adjusting the multiple bending cylinders according to a first pressure adjustment-value includes the following. A third pressure adjustment-value is determined according to the first pressure adjustment-value. The third pressure adjustment-value is used for adjusting the multiple bending cylinders and adjusting the two master cylinders. A first quantity of accumulated adjustment times of the first bending cylinder is obtained. In response to the first quantity of accumulated adjustment times being less than a preset quantity of limit times, the first bending cylinder is adjusted according to the first pressure adjustment-value and the two master cylinders are adjusted according to the third pressure adjustment-value. A second quantity of accumulated adjustment times of the second bending cylinder is obtained, in response to the first quantity of accumulated adjustment times being not less than the preset quantity of limit times. In response to the second quantity of accumulated adjustment times being less than the preset quantity of limit times, the second bending cylinder is adjusted according to the first pressure adjustment-value, and the two master cylinders are adjusted according to the third pressure adjustment-value. In response to the second quantity of accumulated adjustment times being not less than the preset quantity of limit times, the first quantity of accumulated adjustment times and the second quantity of accumulated adjustment times are set to be zero, the first bending cylinder is adjusted according to the first pressure adjustment-value, and the two master cylinders are adjusted according to the third pressure adjustment-value.

In a possible embodiment, determining the master-cylinder adjustment value of the at least one master cylinder according to the first deviation value includes the following. The first deviation value of the target product is determined according to the first average thickness. An adjustment manner for adjusting the at least one master cylinder is obtained. The adjustment manner for adjusting the at least one master cylinder is one of pressure adjustment or roll gap adjustment. A second pressure adjustment-value of the at least one master cylinder is determined according to the first deviation value and a first open coefficient, in response to the adjustment manner for adjusting the at least one master cylinder being the pressure adjustment. The first open coefficient is a conversion coefficient between a thickness and a pressure. A roll gap adjustment-value of the at least one master cylinder is determined according to the first deviation value and a second open coefficient, in response to the adjustment manner for adjusting the at least one master cylinder being the roll gap adjustment. The second open coefficient is a conversion coefficient between a thickness and a roll gap value.

Exemplarily, the electronic device may include, but is not limited to, a processor, a memory, a communication interface, and one or more programs, and may further include an internal storage, a power supply, an application user module, and the like. Those skilled in the art can understand that the schematic diagram is merely an example of the electronic device, does not constitute a limitation to the electronic device, and may include more or fewer components than those illustrated in the schematic diagram, or combine some components, or different components.

Embodiments of the present disclosure further provide a computer-readable storage medium (i.e., memory). The computer-readable storage medium is a memory device in an information processing device, an information transmitting device, or an information receiving device, and is configured to store programs and data. It can be understood that, the computer-readable storage medium herein may include a built-in storage medium in a terminal, and may also include an extended storage medium supported by the terminal. The computer-readable storage medium provides a storage space. An operating system of the terminal is stored in the storage space. In addition, one or more instructions which are configured to be loaded and executed by the processor are also stored in the storage space. There instructions may be one or more computer programs (including program codes). It should be noted that, the computer-readable storage medium herein may be a high-speed random-access memory (RAM), and may also be a non-volatile memory, such as, at least one magnetic disk memory. Optionally, the computer-readable storage medium herein may be at least one computer-readable storage medium that is located away from the foregoing processor. In one embodiment, one or more instructions stored in the computer-readable storage medium can be loaded and executed by the processor, so as to implement corresponding operations of the above control method for a roll press device.

The embodiments of the present disclose are described in detail above. Although the principle and implementations of the present disclosure are described herein by using specific examples herein, descriptions of embodiments are merely intended to help understand the method of the preset disclosure and the core idea of the present disclosure. Meanwhile, for those of ordinary skill in the art, changes may be made to the specific implementations and application range based on the idea of the present disclosure. In conclusion, the contents of this specification may not be construed as a limitation to the present disclosure.

**Claims**

1. A control method for a roll press device, applied to a controller, wherein the controller is configured to be connected to a roll press device, the roll press device comprises at least one master cylinder, at least one bending cylinder, and a roller, the at least one master cylinder and the at least one bending cylinder are configured to adjust the roller to roll a target product, and the method comprises:

    obtaining a first average thickness of the target product, and determining a first deviation value between the first average thickness and a preset target thickness;
    determining a master-cylinder adjustment value of the at least one master cylinder according to the first deviation value, in response to the first deviation value being greater than a first preset deviation-value;
    adjusting the at least one master cylinder according to the master-cylinder adjustment value, in response to the master-cylinder adjustment value being greater than a first threshold; and
    obtaining a second average thickness of the target product in response to the master-cylinder adjustment value being less than or equal to the first threshold, determining a bending-cylinder adjustment value according to the second average thickness, and adjusting the at least one bending cylinder according to the bending-cylinder adjustment value.

2. The method of claim 1, wherein adjusting the at least one master cylinder according to the master-cylinder adjustment value comprises:
    adjusting the at least one master cylinder according to the master-cylinder adjustment value, until the master-cylinder adjustment value is less than or equal to the first threshold.

3. The method of claim 1, wherein before obtaining the first average thickness of the target product, the method further comprises:

    obtaining an operating speed of the roll press device, and obtaining a first pressure of the at least one master cylinder and a second pressure of the at least one bending cylinder in response to the operating speed being greater than a preset speed; and
generating alarm information in response to each of the first pressure and the second pressure not satisfying a preset pressure-limit.

4. The method of claim 1, wherein after adjusting the at least one bending cylinder according to the bending-cylinder adjustment value, the method further comprises:

    obtaining an operating speed of the roll press device and a measurement distance between the target product and a thickness gauge, and calculating out a delay duration of the roll press device according to the operating speed and the measurement distance, wherein the thickness gauge is configured to measure a thickness of the target product;
    obtaining an actual adjustment value of the at least one master cylinder or the at least one bending cylinder, and in response to an absolute value of a difference between the actual adjustment value and the bending-cylinder adjustment value being less than a preset difference, obtaining a first average thickness of the target product at a corresponding side of the at least one master cylinder after the delay duration; and
    repeating an operation of determining the first deviation value between the first average thickness and the preset target thickness, until the actual adjustment value is equal to 0.

5. The method of claim 1, wherein the at least one bending cylinder comprises a plurality of bending cylinders, and determining the bending-cylinder adjustment value according to the second average thickness comprises:

    obtaining a second average thickness of the target product at a corresponding side of each of the plurality of bending cylinders, and determining a second deviation value corresponding to each of the plurality of bending cylinders according to the second average thickness of the target product at the corresponding side of each of the plurality of bending cylinders; and
    determining a plurality of bending-cylinder adjustment values according to a third open coefficient and a maximum second deviation value among a plurality of second deviation values, in response to the maximum second deviation value being greater than a second preset deviation-value, wherein the third open coefficient is a conversion coefficient between a thickness and a pressure.

6. The method of claim 5, wherein the second average thickness comprises a middle average thickness and an edge average thickness; and obtaining the second average thickness of the target product at the corresponding side of each of the plurality of bending cylinders, and determining the second deviation value corresponding to each of the plurality of bending cylinders according to the second average thickness of the target product at the corresponding side of each of the plurality of bending cylinders, comprises:

obtaining, by a thickness gauge, a plurality of thicknesses by measuring a thickness of the target product at the corresponding side of each of the plurality of bending cylinders in a preset measurement direction, and obtaining a plurality of target thicknesses by excluding thicknesses of the target product in a thinned region from the plurality of thicknesses;

calculating out the middle average thickness, according to thicknesses of the target product in a middle film region among the plurality of target thicknesses;

calculating out the edge average thickness, according to thicknesses of the target product in an edge film region among the plurality of target thicknesses; and

determining a difference between the middle average thickness and the edge average thickness as the second deviation value corresponding to each of the plurality of bending cylinders corresponding to the target product.

7. The method of claim 5, wherein the at least one master cylinder comprises two master cylinders, the plurality of bending cylinders comprise a first bending cylinder and a second bending cylinder, the first bending cylinder and the two master cylinders are mounted at the same side of the roll press device, the second bending cylinder and the two master cylinders are mounted at different sides of the roll press device, and adjusting the plurality of bending cylinders according to the bending-cylinder adjustment value comprising:

determining a third pressure adjustment-value according to a first pressure adjustment-value, wherein the third pressure adjustment-value is used for adjusting the plurality of bending cylinders and adjusting the two master cylinders;

obtaining a first quantity of accumulated adjustment times of the first bending cylinder, and in response to the first quantity of accumulated adjustment times being less than a preset quantity of limit times, adjusting the first bending cylinder according to the first pressure adjustment-value and adjusting the two master cylinders according to the third pressure adjustment-value;

obtaining a second quantity of accumulated adjustment times of the second bending cylinder, in response to the first quantity of accumulated adjustment times being not less than the preset quantity of limit times;

adjusting the second bending cylinder according to the first pressure adjustment-value, and adjusting the two master cylinders according to the third pressure adjustment-value, in response to the second quantity of accumulated adjustment times being less than the preset quantity of limit times; and

setting the first quantity of accumulated adjustment times and the second quantity of accumulated adjustment times to be zero, adjusting the first bending cylinder according to the first pressure adjustment-value, and adjusting the two master cylinders according to the third pressure adjustment-value, in response to the second quantity of accumulated adjustment times being not less than the preset quantity of limit times.

8. The method of claim 1, wherein determining the master-cylinder adjustment value of the at least one master cylinder according to the first deviation value comprises:

determining the first deviation value of the target product according to the first average thickness, and obtaining an adjustment manner for adjusting the at least one master cylinder, wherein the adjustment manner for adjusting the at least one master cylinder is one of pressure adjustment and roll gap adjustment;

determining a second pressure adjustment-value of the at least one master cylinder according to the first deviation value and a first open coefficient, in response to the adjustment manner for adjusting the at least one master cylinder being the pressure adjustment, wherein the first open coefficient is a conversion coefficient between a thickness and a pressure; and

determining a roll gap adjustment-value of the at least one master cylinder according to the first deviation value and a second open coefficient, in response to the adjustment manner for adjusting the at least one master cylinder being the roll gap adjustment, wherein the second open coefficient is a conversion coefficient between a thickness and a roll gap value.

9. A controller, configured to execute a control method for a roll press device, the controller is configured to be connected to the roll press device, the roll press device comprises at least one master cylinder, at least one bending cylinder, and a roller, the at least one master cylinder and the at least one bending cylinder are configured to adjust the roller to roll a target product, and the controller comprises:

an obtaining unit configured to obtain a first average thickness of the target product, and determine a first deviation value between the first average thickness and a preset target thickness;

a determining unit configured to determine a master-cylinder adjustment value of the at least one master cylinder according to the first deviation value in response to the first deviation value being greater than a first preset deviation-value; and

an adjusting unit configured to adjust the at least one master cylinder according to the master-cylinder adjustment value in response to the master-cylinder adjustment value being greater than a first threshold; wherein

the adjusting unit is further configured to determine a second average thickness of the target product in response to the master-cylinder adjustment value being less than or equal to the first threshold, determine a bending-cylinder adjustment value according to the second average thickness, and adjust the at least one bending cylinder according to the bending-cylinder adjustment value.

10. An electronic device, comprising a processor, a memory, a communication interface, and one or more programs, wherein the one or more programs are stored in the memory and configured to be executed by the processor, and the one or more programs comprise instructions for executing operations in the method of any one of claims 1 to 8.

11. A computer-readable storage medium storing a computer program for electronic data interchange which, when executed, is operable with a computer to execute the method of any one of claim 1 to 8.

**FIG. 1**

A FIRST AVERAGE THICKNESS OF A TARGET PRODUCT IS OBTAINED, AND A FIRST DEVIATION VALUE BETWEEN THE FIRST AVERAGE THICKNESS AND A PRESET TARGET THICKNESS IS DETERMINED ⟋ S201

A MASTER-CYLINDER ADJUSTMENT VALUE OF THE AT LEAST ONE MASTER CYLINDER IS DETERMINED ACCORDING TO THE FIRST DEVIATION VALUE, IN RESPONSE TO THE FIRST DEVIATION VALUE BEING GREATER THAN A FIRST PRESET DEVIATION-VALUE ⟋ S202

THE AT LEAST ONE MASTER CYLINDER IS ADJUSTED ACCORDING TO THE MASTER-CYLINDER ADJUSTMENT VALUE, IN RESPONSE TO THE MASTER-CYLINDER ADJUSTMENT VALUE BEING GREATER THAN A FIRST THRESHOLD ⟋ S203

A SECOND AVERAGE THICKNESS OF THE TARGET PRODUCT IS OBTAINED IN RESPONSE TO THE MASTER-CYLINDER ADJUSTMENT VALUE BEING LESS THAN OR EQUAL TO THE FIRST THRESHOLD, A BENDING-CYLINDER ADJUSTMENT VALUE IS DETERMINED ACCORDING TO THE SECOND AVERAGE THICKNESS, AND THE AT LEAST ONE BENDING CYLINDER IS ADJUSTED ACCORDING TO THE BENDING-CYLINDER ADJUSTMENT VALUE ⟋ S204

# FIG. 2

HORIZONTAL
MOVEMENT DIRECTION
OF DETECTION HEAD

THICKNESS GAUGE

PRESET DISTANCE

MEASUREMENT
POINT

MOVEMENT
DIRECTION
OF TARGET
PRODUCT

**FIG. 3**

A FIRST AVERAGE THICKNESS OF A TARGET PRODUCT IS OBTAINED, AND A FIRST DEVIATION VALUE BETWEEN THE FIRST AVERAGE THICKNESS AND A PRESET TARGET THICKNESS IS DETERMINED ⟋ S401

↓

A MASTER-CYLINDER ADJUSTMENT VALUE OF THE AT LEAST ONE MASTER CYLINDER IS DETERMINED ACCORDING TO THE FIRST DEVIATION VALUE, IN RESPONSE TO THE FIRST DEVIATION VALUE BEING GREATER THAN A FIRST PRESET DEVIATION-VALUE ⟋ S402

↓

THE AT LEAST ONE MASTER CYLINDER IS ADJUSTED ACCORDING TO THE MASTER-CYLINDER ADJUSTMENT VALUE, IN RESPONSE TO THE MASTER-CYLINDER ADJUSTMENT VALUE BEING GREATER THAN A FIRST THRESHOLD ⟋ S403

↓

THE ABOVE OPERATIONS ARE REPEATED UNTIL THE MASTER-CYLINDER ADJUSTMENT VALUE IS LESS THAN OR EQUAL TO THE FIRST THRESHOLD ⟋ S404

# FIG. 4

| $A = AVG$(OPERATING SIDE) − (SET MEDIAN + OFFSET) | $B = AVG$(OPERATING SIDE) − (SET MEDIAN + OFFSET) |

| $A >$ FIRST PRESET DEVIATION-VALUE | $B >$ FIRST PRESET DEVIATION-VALUE |

ACTUAL ADJUSTMENT VALUE OF MASTER CYLINDER
= ADJUSTMENT RANGE OF MASTER CYLINDER

WHETHER ACTUAL ADJUSTMENT VALUE OF MASTER
CYLINDER IS ZERO

YES

NO

RECALCULATE $A$ AND $B$ AFTER DELAY DURATION

THIS CYCLE ENDS TO ENTER BENDING-CYLINDER
CYCLE

# FIG. 5

A FIRST AVERAGE THICKNESS OF A TARGET PRODUCT IS OBTAINED, AND A FIRST DEVIATION VALUE BETWEEN THE FIRST AVERAGE THICKNESS AND A PRESET TARGET THICKNESS IS DETERMINED ⟋ S601

A MASTER-CYLINDER ADJUSTMENT VALUE OF THE AT LEAST ONE MASTER CYLINDER IS DETERMINED ACCORDING TO THE FIRST DEVIATION VALUE, IN RESPONSE TO THE FIRST DEVIATION VALUE BEING GREATER THAN A FIRST PRESET DEVIATION-VALUE ⟋ S602

THE AT LEAST ONE MASTER CYLINDER IS ADJUSTED ACCORDING TO THE MASTER-CYLINDER ADJUSTMENT VALUE, IN RESPONSE TO THE MASTER-CYLINDER ADJUSTMENT VALUE BEING GREATER THAN A FIRST THRESHOLD ⟋ S603

A SECOND AVERAGE THICKNESS OF THE TARGET PRODUCT IS OBTAINED IN RESPONSE TO THE MASTER-CYLINDER ADJUSTMENT VALUE BEING LESS THAN OR EQUAL TO THE FIRST THRESHOLD, A BENDING-CYLINDER ADJUSTMENT VALUE IS DETERMINED ACCORDING TO THE SECOND AVERAGE THICKNESS, AND THE AT LEAST ONE BENDING CYLINDER IS ADJUSTED ACCORDING TO THE BENDING-CYLINDER ADJUSTMENT VALUE ⟋ S604

AN OPERATING SPEED OF THE ROLLER SEPARATION DEVICE AND A MEASUREMENT DISTANCE BETWEEN THE TARGET PRODUCT AND A THICKNESS GAUGE ARE OBTAINED, A DELAY DURATION OF THE ROLLER SEPARATION DEVICE IS CALCULATED OUT ACCORDING TO THE OPERATING SPEED AND THE MEASUREMENT DISTANCE, AND THE THICKNESS GAUGE IS CONFIGURED TO MEASURE THE THICKNESS OF THE TARGET PRODUCT ⟋ S605

AN ACTUAL ADJUSTMENT VALUE OF THE MASTER CYLINDER OR THE BENDING CYLINDER IS OBTAINED, AND IN RESPONSE TO AN ABSOLUTE VALUE OF A DIFFERENCE BETWEEN THE ACTUAL ADJUSTMENT VALUE AND THE BENDING-CYLINDER ADJUSTMENT VALUE BEING LESS THAN A PRESET DIFFERENCE, A FIRST AVERAGE THICKNESS OF THE TARGET PRODUCT AT A CORRESPONDING SIDE OF THE MASTER CYLINDER AFTER THE DELAY DURATION IS RE-OBTAINED; AND AN OPERATION OF DETERMINING THE FIRST DEVIATION VALUE BETWEEN THE FIRST AVERAGE THICKNESS AND THE PRESET TARGET THICKNESS IS REPEATED, UNTIL THE ACTUAL ADJUSTMENT VALUE IS EQUAL TO 0 ⟋ S606

## FIG. 6

OPERATING SPEED AND PRESSURE DETECTION

MASTER-CYLINDER CYCLE CONTROL

MASTER-CYLINDER CYCLE ENDS

$C = (P2 - P1) >$ SECOND PRESET DEVIATION-VALUE

$D = (P3 - P4) >$ SECOND PRESET DEVIATION-VALUE

YES

NO

$X = \text{Max}(C, D)(x)T$

WHETHER ACTUAL ADJUSTMENT VALUE OF BENDING CYLINDER IS ZERO

YES

NO

ACTUAL ADJUSTMENT VALUE OF BENDING CYLINDER = ADJUSTMENT RANGE OF BENDING CYLINDER

AFTER DELAY DURATION

CYCLE ENDS

## FIG. 7

THINNED REGION

EDGE REGION

MIDDLE FILM REGION

## FIG. 8

| OBTAINING UNIT | DETERMINING UNIT | ADJUSTING UNIT |

CONTROLLER

**FIG. 9**

PROCESSOR

MEMEORY

PROGRAM CODES

COMMUNICATION INTERFACE

ELECTRONIC DEVICE

**FIG. 10**

Europäisches Patentamt

European Patent Office

Office européen des brevets

# EUROPEAN SEARCH REPORT

**Application Number**

EP 24 22 3250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 111647 A (HITACHI ENG SERVICE) 10 June 2013 (2013-06-10) | 1-3,9-11 | INV. B30B3/04 |
| Y | * paragraphs [0022] - [0047]; figures * | 4 | B21B37/16 |
| A | | 5-8 | B30B15/26 |
| | ----- | | |
| Y | WO 2020/100561 A1 (PANASONIC IP MAN CO LTD [JP]) 22 May 2020 (2020-05-22) * paragraphs [0039] - [0043]; figures * | 4 | |
| | ----- | | |

**TECHNICAL FIELDS SEARCHED (IPC)**

B21B

The present search report has been drawn up for all claims

| Place of search | Date of completion of the search | Examiner |
|---|---|---|
| The Hague | 11 May 2025 | Labre, Arnaud |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 3250

This annex lists the patent family members relating to the patent documents cited in  the above-mentioned European search report.
The members are as contained in the European Patent Office EDP file on
The European Patent Office is in no way liable for these particulars which are merely given for the purpose of information.

11-05-2025

| Patent document cited in search report | Publication date | Patent family member(s) | Publication date |
|---|---|---|---|
| JP 2013111647 A | 10-06-2013 | CN 103128987 A<br>JP 5328876 B2<br>JP 2013111647 A | 05-06-2013<br>30-10-2013<br>10-06-2013 |
| WO 2020100561 A1 | 22-05-2020 | CN 112912185 A<br>JP 7316589 B2<br>JP WO2020100561 A1<br>US 2021394246 A1<br>WO 2020100561 A1 | 04-06-2021<br>28-07-2023<br>30-09-2021<br>23-12-2021<br>22-05-2020 |

EPO FORM P0459